# EUROPEAN PATENT APPLICATION

(11) **EP 2 961 181 A1**
(43) Date of publication of application: **30.12.2015**
(21) Application number: 15001893.5
(22) Date of filing: 25.06.2015
(51) Int. Cl.: H04N 21/4627, H04N 5/913

(54) **BROADCAST RECEPTION DEVICE AND CONDITIONAL ACCESS MODULE**

(30) Priority: 25.06.2014 US 201462016656 P; 18.07.2014 US 201462026048 P
(71) Applicant: LG Electronics Inc., Yeongdeungpo-gu Seoul 150-721 (KR)
(72) Inventor: YOON, Joonhee, 137-893 Seoul (KR); KIM, Kyounghwan, 137-893 Seoul (KR); SUH, Jongyeul, 137-893 Seoul (KR)
(74) Representative: Frenkel, Matthias Alexander

(57) **Abstract**

Provided is a broadcast reception device connected to a conditional access module descrambling a scrambled broadcast content. The device includes: a broadcast reception unit receiving a broadcast signal; and a control unit receiving usage rule information that defines a usage of the broadcast content relating to the broadcast signal from the conditional access module and managing the broadcast content on the basis of the usage rule information.

## Description

### BACKGROUND

The present disclosure relates to a broadcast reception device, a method of operating the broadcast reception device, a conditional access module, and a method of operating the conditional access module.

In order to provide content to only viewers who pay subscription fees, broadcasters scramble and transmit the content and broadcast reception devices descramble the scrambled content and provide the descrambled content to the viewers. Such a broadcast system is called a conditional access system (CAS). The CAS may have a different specific operation method depending on a CAS provider that provides CAS. Accordingly, a broadcast reception device is required to implement all the specific functions and operation methods that a corresponding provider demands in order to provide a CAS of a specific provider. Additionally, an authentication for performing all operations that a corresponding provider requires should be received from the corresponding provider. Accordingly, it is difficult for a broadcast reception device to provide a CAS according to various providers. To solve this issue, a conditional access module (CAM) and a common interface (CI) are used.

The CAM is a module for descrambling broadcast content that is scrambled according to a CAS of each individual provider. The CI is an interface for connecting a broadcast reception device and a CAM. When a broadcast reception device includes a CI slot that a CAM is connected, a user may connect the CAM for descrambling broadcast content that the user wants to view to the CI slot. Through this, a broadcast reception device implements only a CI interoperating with a CAM without implementing all operations that a CAS of an individual provider so that it may descramble scrambled broadcast content to a viewer and provide the descrambled broadcast content to a viewer.

Due to the spread of digital storage media and the development of communication networks, the spread of digital files becomes easier. Accordingly, cases that descrambled broadcast content is illegally distributed are growing. Therefore, required is a broadcast reception device for managing the copy and output of descrambled broadcast content in addition to simply descrambling scrambled broadcast content.

### SUMMARY

Embodiments provide a broadcast reception device managing the copy and output of descrambled broadcast content, a method of operating the broadcast reception device, a conditional access module, and a method of operating the conditional access module.

Embodiments also provide a broadcast reception device managing the number of copying descrambled broadcast content and whether to use an analog output, a method of operating the broadcast reception device, a conditional access module, and a method of operating the conditional access module.

In one embodiment, provided is a broadcast reception device connected to a conditional access module descrambling a scrambled broadcast content. The device includes: a broadcast reception unit receiving a broadcast signal; and a control unit receiving usage rule information that defines a usage of the broadcast content relating to the broadcast signal from the conditional access module and managing the broadcast content on the basis of the usage rule information.

The usage rule information may include digital only token information representing whether to prohibit an analog output of the broadcast content; and the control unit may limit an analog output on the basis of the digital only token information.

The usage rule information may include encryption mode indicator information representing whether to allow a copy of the broadcast content; and when the encryption mode indicator information represents that the copy of the broadcast content is limited, the control unit may limit an analog output on the basis of the digital only token information.

When the encryption mode indicator information represents that the copy of the broadcast content is limited, the encryption mode indicator information may represent that the copy of the broadcast content is allowed once.

The usage rule information may include retention period information representing a retention period of content obtained by recording or time-shifting the broadcast content; and the control unit may retain the broadcast content on the basis of the retention period information.

The retention period information may represent one of 90 min, 6hr, 12 hr, one of 1 day to 1020 days, and limitless.

The usage rule information may include copy number information representing the number of times that the copy of the broadcast content is allowed; and the control unit may control the copy of the broadcast content on the basis of the copy number information.

The copy number information may represent one of a case that the copy of the broadcast content is allowed once, a case that the copy of the broadcast content is allowed by one of two times to fourteen times, and a case that the copy of the broadcast content is allowed without limitation.

The copy number information may represent a digital copy number only.

In another embodiment, provided is method of operating a broadcast reception device connected to a conditional access module descrambling a scrambled broadcast content. The method includes: receiving a broadcast signal; receiving usage rule information that defines a usage of the broadcast content relating to the broadcast signal from the conditional access module; and managing the broadcast content on the basis of the usage rule information.

In further another embodiment, provided is a conditional access module connected to a broadcast reception device receiving a broadcast signal, the conditional access module receiving information on a conditional access system from the broadcast signal, extracting usage rule information that defines a usage of the broadcast content relating to the broadcast signal from the information on the conditional access system, and transmitting the usage rule information to the broadcast reception device.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating a broadcast reception device and a conditional access module (CAM) according to an embodiment of the present invention.
FIG. 2 is a view when a CAM obtains usage rule information (URI) according to an embodiment of the present invention.
Fig. 3 is a view illustrating a syntax of URI according to another embodiment of the present invention.
Fig. 4 is a view illustrating a basic value of URI according to an embodiment of the present invention.
Fig. 5 is a view illustrating a syntax of URI according to another embodiment of the present invention.
Fig. 6 is a view illustrating a value that broadcast content copy number information has according to another embodiment of the present invention.
Fig. 7 is a view illustrating a basic value of information that URI includes according to another embodiment of the present invention.
Fig. 8 is a view illustrating a syntax of URI according to another embodiment of the present invention.
Fig. 9 is a view illustrating a syntax of URI according to another embodiment of the present invention.
Fig. 10 is a view illustrating a syntax of URI according to another embodiment of the present invention.
Fig. 11 is a view illustrating a value that digital only token information has according to another embodiment of the present invention.
Fig. 12 is a view illustrating a syntax of URI according to another embodiment of the present invention.
Fig. 13 is a view illustrating a syntax of URI according to another embodiment of the present invention.
Fig. 14 is a view illustrating a syntax of URI according to another embodiment of the present invention.
Fig. 15 is a view illustrating a syntax of URI according to another embodiment of the present invention.
Fig. 16 is a view illustrating a syntax of URI according to another embodiment of the present invention.
Fig. 17 is a view illustrating a basic value of information that URI includes according to another embodiment of the present invention.
Fig. 18 is a ladder diagram illustrating an operation that a CAM receives URI and delivers the URI to a broadcast reception device according to an embodiment of the present invention.
Fig. 19 is a view illustrating an operation of a broadcast reception device managing broadcast content according to an embodiment of the present invention.

### DETAILED DESCRIPTION OF THE EMBODIMENTS

Preferred embodiments of the present invention are described in more detail, their examples are shown in the accompanying drawings. Detailed description below with reference to the accompanying drawings is for preferred embodiments of the present invention rather than representing only embodiments implemented according to embodiments of the present invention. The following detailed description includes details for providing the thorough understanding of the present invention. However, it is apparent to those skilled in the art that the present invention is executed without such details.

Although most terms used in the present invention are selected from general terms widely used in corresponding fields, some terms are arbitrarily by applicants and their meanings are described in more detail in the following description if necessary. Accordingly, the present invention should be understood based on the intended meanings of terms instead of the simple names or meanings of the terms.

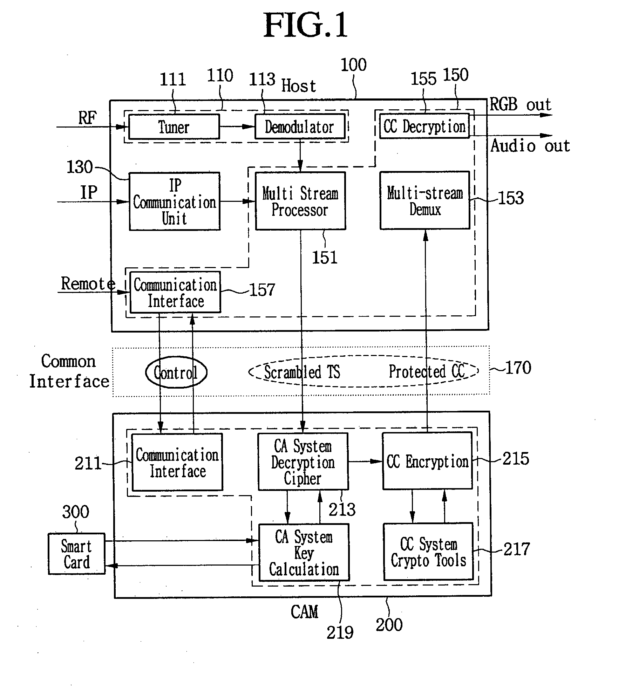

Fig. 1 is a view illustrating a broadcast reception device and a conditional access module (CAM) according to an embodiment of the present invention.

A broadcast reception device 100 according to an embodiment of the present invention includes a broadcast reception unit 110, an internet protocol (IP) communication unit 130, a control unit 150, a common interface (CI) slot 170, and an output unit (not shown).

The broadcast reception device 100 receives and demodulates a broadcast signal. In more detail, the broadcast reception unit 110 may include a tuner 111 for receiving a broadcast signal. Additionally, the broadcast reception unit 110 may include a demodulator 113 for demodulating a broadcast signal.

The IP communication unit 130 receives and transmits IP data.

The control unit 150 controls an operation of the broadcast reception device 100. In more detail, the control unit 150 may include a multi stream processor 151 for controlling a plurality of multi streams for CAM. Additionally, the control unit 150 may include a multi stream demux 153 for demuxing each stream from a plurality of descrambled streams. Additionally, the control unit 150 may include a contents control (CC) decryption unit 155 for decrypting broadcast content encrypted content protection. The CC decryption unit 155 may decrypt broadcast content encrypted based on a unique key value allocated to the broadcast reception device 100. Additionally, the control unit 150 may include a communication interface unit 157 for transmitting a control command of the broadcast reception device to a CAM and receiving a response for the control command from the CAM.

The CI slot 170 connects the broadcast reception device 100 to a conditional access module (CAM) 200. In more detail, the broadcast reception device 100 may transmit a control command and a scrambled broadcast stream through a CI sot and may receive a response for the command and a broadcast stream obtained by encrypting a descrambled broadcast stream.

The CAM 200 according to an embodiment of the present invention includes a control unit 210. In more detail, the control unit 210 controls an operation of the CAM 200. In more detail, the control unit 210 receives a scrambled broadcast stream from the broadcast reception device 100 and descrambles the received broadcast stream. In more detail, the control unit 210 may receive a control command from the broadcast reception device 100 and may include a communication interface unit 211 for transmitting a response for the control command. Additionally, the control unit 210 may include a conditional access system key calculation unit for obtaining a control word (CW) on the basis of broadcast stream. At this point, the CW represents a key necessary for descrambling scrambled broadcast content. In more detail, the CAS key calculation unit 219 may extracts an entitlement control message (ECM) from broadcast stream and transmit the ECM to the smart card 300 and may obtain a CW from the smart card 300. Additionally, the control unit 210 may include a CAS decryption cipher 213 for descrambling scrambled broadcast content by using the obtained CW. Additionally, the control unit 210 may include a CC encryption 251 for encrypting descrambled broadcast content in order to prevent the drain of descrambled broadcast content. In a detailed embodiment, the CC encryption unit 251 may encrypt descrambled broadcast content by obtaining a key value for encryption from the CAS decryption cipher 213. At this point, the key value for encryption may be a unique key value allocated to a corresponding CAM.

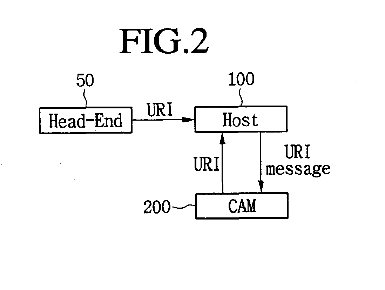

The CAM 300 may extract usage rule information (URI) from broadcast stream. The URI is that at least one of content providers and content distributors designates the usage rule of each content. In more detail, the URI may represent at least one of rules for the output and copy of content. For example, the URI may represent whether to allow the copy of content. The URI may represent the usage rule of specific broadcast service. Additionally, the URI may represent the usage rule of a specific event that broadcast service includes. Additionally, the URI may represent whether to allow the analog output of content. At this point, the analog output is to output analog audio or analog video. Additionally, digital output is to output digital audio or digital video. In more detail, a terminal for outputting an analog output may include at least one of a scart terminal, a composite terminal, and a component terminal. A terminal for outputting a digital output may include at least one of a High Definition Multimedia Interface (HDMI) terminal and a Sony Philips Digital Interface (SPDIF) terminal. The reception of the URI will be described in more detail with reference to Fig. 2.

Fig. 2 is a view when a CAM obtains URI according to an embodiment of the present invention.

A CAM 200 may extract URI from broadcast stream through a control unit 210. In more detail, the CAM 200 may receive URI through an undisclosed way. In a specific embodiment, the CAM 200 may extract URI from at least one of ECMs for providing an entitlement management message (EMM) for managing the entitlement of the smart card 300 and a CW for descrambling scrambled broadcast content.

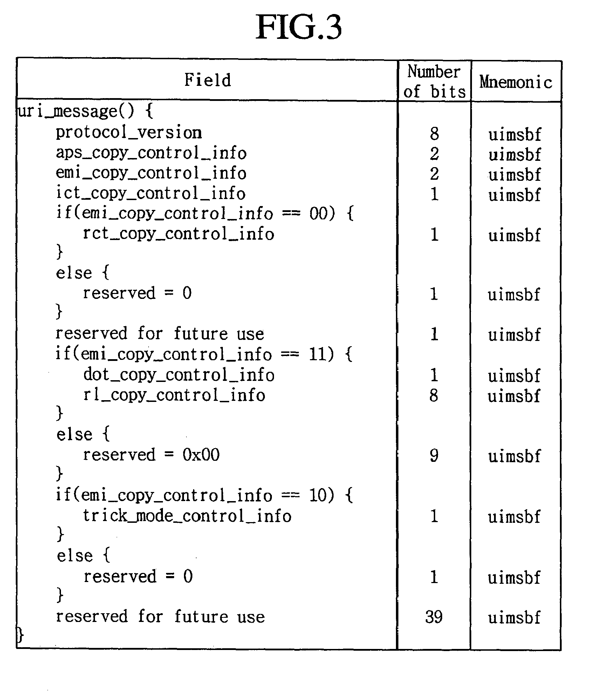

Additionally, the CAM 200 may transmit URI to the broadcast reception device 100. In more detail, the CAM 200 may transmit URI to the broadcast reception device 100 in a URI message format. Additionally, the CAM 200 may transmit a secured protocol to the broadcast reception device 100. A specific syntax of URI according to an embodiment of the present invention will be described with reference to Fig. 3.

Fig. 3 is a view illustrating a syntax of URI according to another embodiment of the present invention.

The URI may include protocol version information representing the protocol version of URI.

In the case of an analog output, a copy protection algorithm is limited in comparison to a digital output. Additionally, an applicable copy protection algorithm is limited. For example, a copy generation management system-analog (CGMS-A) cannot be applied to a high definition (HD) image. Accordingly, the URI may include information relating to a control of the analog output of content. Additionally, the URI may include analog protection system information representing whether to use analog copy protection applied to the analog output of content. Additionally, the URI may include encryption mode indicator information representing whether to allow the copy of content. The encryption mode indicator information may represent at least one of a case that the copy of content is not limited, a case that an additional copy of content is not allowed any more, a case that only one content copy is allowed, and a case that the copy of content is prohibited. Additionally, the URI may include image constrained trigger information representing whether to limit the quality of an analog output image of content. In a specific embodiment, the encryption mode indicator information may represent whether to allow copy, which is applied to both an analog output and a digital output. Additionally, the URI may include redistribution control information representing whether to allow the redistribution of broadcast content. Additionally, the URI may include digital only token information representing whether to prohibit the analog output of content.

Additionally, the URI may include retention period information representing the maximum retention period of record or time-shift content. In more detail, the retention period information may represent at least one of a case that content is retained for 90 min, a case that content is retained for 6 hr, a case that content is retained for 12 hr, a case that content is retained for one of 1 day to 252 days, and a case that content is retained without restriction.

Additionally, content providers or content redistributors are required to prevent advertisements, which are inserted by them, from being played at double speed and skipped by users. Accordingly, the URI may include trick mode control information representing whether a trick mode for content is limited. A trick mode is that content is played at double speed instead of a normal playback speed.

In a specific embodiment, the URI, like the embodiment of Fig. 3, may include at least one of a protocol_version field, an aps_copy_control_info field, an emi_copy_control_info field, an ict_copy_control_info field, rct_copy_control_info field, a dot_copy_control_info field, a rl_copy_control_info field, and a trick_mode_control_info field.

The protocol_version field represents protocol version information representing the protocol version of URI. In a specific embodiment, the protocol_version field may be an 8-bit field. In a specific embodiment, the CAM 200 may transmit a URI message to the broadcast reception device 100 on the basis of the protocol version of URI that the broadcast reception device 100 supports. For example, when the broadcast reception device 100 supports the protocol version of the current reception URI, the CAM 200 may transmit a URI message to the broadcast reception device 100.

The aps_copy_control_info field represents analog protection system information representing whether to use analog copy protection applied to the analog output of content. The aps_copy_control_info field may represent not using an analog copy protection system. At this point, a value of the aps_copy_control_info field may be 0x0. The aps_copy_control_info field may represent using an analog copy protection system and not using a split bust function. At this point, a value of the aps_copy_control_info field may be 0x1. The aps_copy_control_info field may represent using an analog copy protection system and using a split bust function through two lines. At this point, a value of the aps_copy_control_info field may be 0x2. The aps_copy_control_info field may represent using an analog copy protection system and using a split bust function through four lines. At this point, a value of the aps_copy_control_info field may be 0x3. In a specific embodiment, the aps_copy_control_info field may be a 2-bit field.

The emi_copy_control_info field may represent encryption mode indicator information representing whether to allow the copy of content. The emi_copy_control_info field may represent that the copy of content is not limited. At this point, a value of the emi_copy_control_info field may be 0x0. The emi_copy_control_info field may represent that an additional copy of content is not allowed. At this point, a value of the emi_copy_control_info field may be 0x1. The emi_copy_control_info field may represent that only one copy of content is allowed. At this point, a value of the emi_copy_control_info field may be 0x2. The emi_copy_control_info field may represent that the copy of content is prohibited. At this point, a value of the emi_copy_control_info field may be 0x3. In a specific embodiment, the emi_copy_control_info field may be a 2-bit field.

The ict_copy_control_info field represents image constrained trigger information representing whether to limit the quality of an analog output image of content. The ict_copy_control_info field may represent that the quality constraint of an image is not applied. At this point, a value of the ict_copy_control_info field may be 0x0. The ict_copy_control_info field may represent that the quality of an image is limited. At this point, a value of the ict_copy_control_info field may be 0x1. In a specific embodiment, the ict_copy_control_info field may be a 1-bit field.

The rct_copy_control_info field represents redistribution control information representing whether to allow the redistribution of broadcast content. The rct_copy_control_info field may represent that the redistribution control is not applied. At this point, a value of the rct_copy_control_info field may be 0x0. The rct_copy_control_info field may represent that the redistribution control is applied. At this point, a value of the rct_copy_control_info field may be 0x1.

The dot_copy_control_info field represents digital only token information representing whether to prohibit the analog output of content. The dot_copy_control_info field may represent that the analog output of content is not prohibited. At this point, a value of the dot_copy_control_info field may be 0x0. The dot_copy_control_info field may represent that the analog output of content is prohibited. At this point, a value of the dot_copy_control_info field may be 0x1. In a specific embodiment, the dot_copy_control_info field may be a 1-bit field.

Additionally, the rl_copy_control_info field represents retention period information representing the maximum retention period of record or time-shift content. The rl_copy_control_info field may represent that the retention period of broadcast content is 90 min. At this point, a value of the rl_copy_control_info field may be 0x0. The rl_copy_control_info field may represent that the retention period of broadcast content is 6 hr. At this point, a value of the rl_copy_control_info field may be 0x1. The rl_copy_control_info field may represent that the retention period of broadcast content is 12 hr. At this point, a value of the rl_copy_control_info field may be 0x2. The rl_copy_control_info field may represent that the retention period of broadcast content is one of 1 day to 252 days. At this point, a value of the rl_copy_control_info field may be one value of 0x03 to 0xFE. The rl_copy_control_info field may represent that the retention period of broadcast content is not limited. At this point, a value of the rl_copy_control_info field may be 0xFF. In a specific embodiment, the rl_copy_control_info field may be a 10-bit field.

The trick_mode_control_info field represents trick mode control information representing whether a trick mode for content is limited. The trick_mode_control_info field may represent that the trick mode for content is not limited. At this point, a value of the trick_mode_control_info field may be 0x0. The trick_mode_control_info field may represent that the trick mode for content is not limited. At this point, a value of the trick_mode_control_info field may be 0x1. In a specific embodiment, the trick_mode_control_info field may be a 1-bit field.

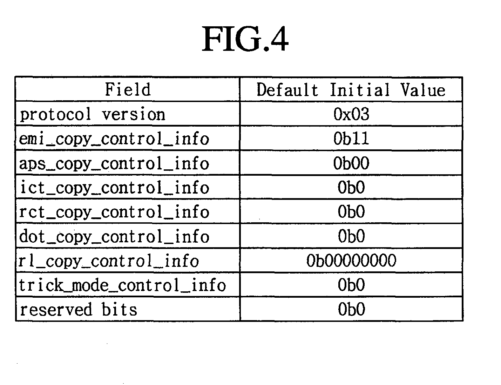

When broadcast service is changed or one event is terminated and a new event starts, URI may not be received. In such a case, a value of basic URI information is used. This will be described with reference to Fig. 4.

Fig. 4 is a view illustrating a basic value of URI according to an embodiment of the present invention.

A basic value of the protocol_version field may represent that a URI protocol version is 3. At this point, a basic value of the protocol_version field may be 0x03.

The basic value of the emi_copy_control_info field may represent that the copy of content is prohibited. At this point, the basic value of the emi_copy_control_info field may be 0x3.

A basic value of the aps_copy_control_info field may represent not using an analog copy protection system. At this point, the value of the aps_copy_control_info field may be 0x0.

A basic value of the ict_copy_control_info field may represent that the quality constraint of an image is not applied. At this point, the basic value of the ict_copy_control_info field may be 0x0.

The basic value of the rct_copy_control_info field may represent that the redistribution control is not applied. At this point, the basic value of the rct_copy_control_info field may be 0x0.

The dot_copy_control_info field may represent that the analog output is not prohibited. At this point, a basic value of the dot_copy_control_info field may be 0x0.

The basic value of the rl_copy_control_info field may represent that the retention period of broadcast content is 90 min. At this point, the basic value of the rct_copy_control_info field may be 0x0.

The basic value of the trick_mode_control_info field may represent that the trick mode for content is not limited. At this point, the basic value of the trick_mode_control_info field may be 0x0.

Broadcast content providers or distributors may manage the usage of content through the embodiments of Figs. 3 and 4. However, the URI in the embodiments of Figs. 3 and 4 allows only one copy or does not limit the copy of content, so that the management for the number of copying broadcast content is limited excessively. Accordingly, a method of managing the number of copying broadcast content through broadcast content providers or distributors is required. Accordingly, the URI may be required to include broadcast content copy number information representing the number of copying content. Especially, the URI may be required to include broadcast content copy number information representing the number of copying content, which is used for clearly managing the number of copying. This will be described with reference to the following drawings.

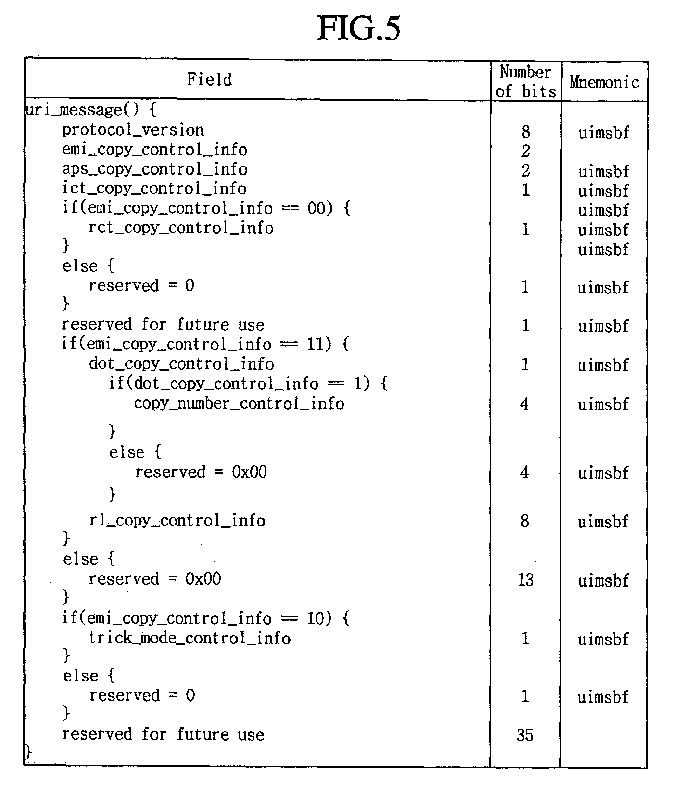

Fig. 5 is a view illustrating a syntax of URI according to another embodiment of the present invention.

The URI may include broadcast content copy number information representing the number of times that the copy of content is allowed as an additional field. In a specific embodiment, only when digital only token information represents that the analog output of content is prohibited, the URI may include copy number information. At this point, the broadcast content copy number information represents the number of times being allowed for the digital copy of content. Additionally, when encryption mode indicator information represents the copy is not allowed, the URI may include broadcast content copy number information.

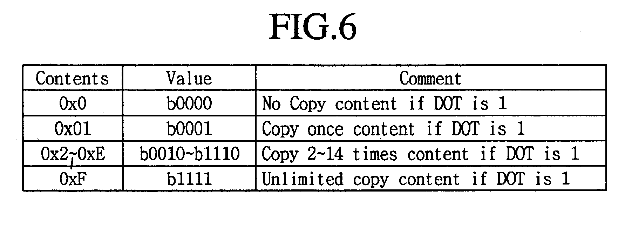

In a specific embodiment, URI syntax may include a copy_number_control_info field representing broadcast content copy number information. In a specific embodiment, the copy_number_control_info field may be a 4-bit field. A value that copy number information has will be described with reference to Fig. 6.

Fig. 6 is a view illustrating a value that broadcast content copy number information has according to another embodiment of the present invention.

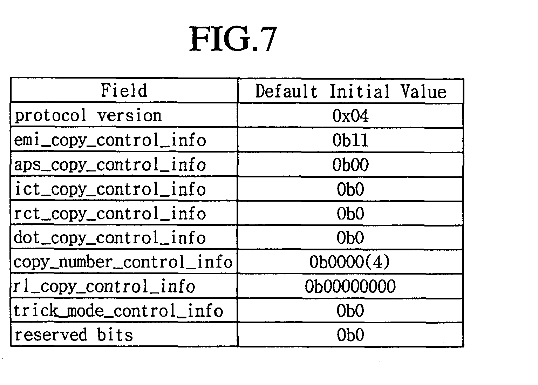

The broadcast content copy number information may represent that the copy of broadcast content is not allowed. At this point, a value of the copy_number_control_info field may be 0x0. Additionally, the broadcast content copy number information may represent that the copy of broadcast content is allowed once. At this point, a value of the copy_number_control_info field may be 0x1. Additionally, the broadcast content copy number information may represent that the copy of broadcast content is allowed by one of two times to fourteen times. At this point, a value of the copy_number_control_info field may be one of 0x2 to 0xE. Additionally, the broadcast content copy number information may represent that the copy of broadcast content is allowed without restriction. At this point, a value of the copy_number_control_info field may be 0xF. A basic value of copy number information will be described with reference to Fig. 7.

Fig. 7 is a view illustrating a basic value of information that URI includes according to another embodiment of the present invention.

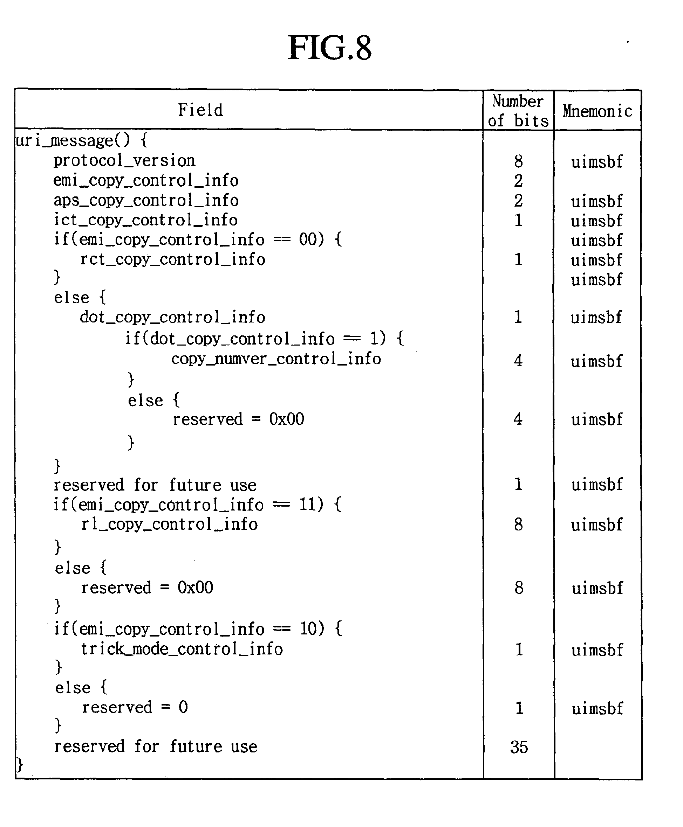

The basic value of copy number information may represent that the copy is not allowed.. At this point, the basic value of the copy_number_control_info field may be 0x0. Like the embodiment of Fig. 5, the inclusion of the number of copying may be limited only when an encryption mode indicator represents that the copy is not allowed. An embodiment for resolving this will be described with reference to Figs. 8 to 10.

Fig. 8 is a view illustrating a syntax of URI according to another embodiment of the present invention.

The URI may include digital only token information representing whether to prohibit the analog output of content when the copy of content is limited. A case that the copy of content is limited may include at least one of a case that the copy of content is prohibited, a case that the copy of content is allowed once, and a case that the copy of content is not allowed. Accordingly, the URI may include copy number information only when the encryption mode indicator represents that the copy of content is limited. In more detail, the URI may include copy number information when the copy of content is limited and the output of an analog output is prohibited. Like the embodiment of Fig. 8, in a specific embodiment, when a value of emi_copy_control_info is not 0x0 and a value of dot_copy_contro_info is 0x1, the URI may include copy_number_control_info.

Through this, when the copy of content is allowed only once or an additional copy of content is prohibited in addition to a case that the copy of content is prohibited, the broadcast reception device 100 may limit the analog output of broadcast content on the basis of analog digital only token information. Additionally, when the copy of content is allowed only once or an additional copy of content is prohibited in addition to a case that the copy of content is prohibited, the broadcast reception device 100 may limit the copy of broadcast content on the basis of broadcast content copy number information if an analog output is limited.

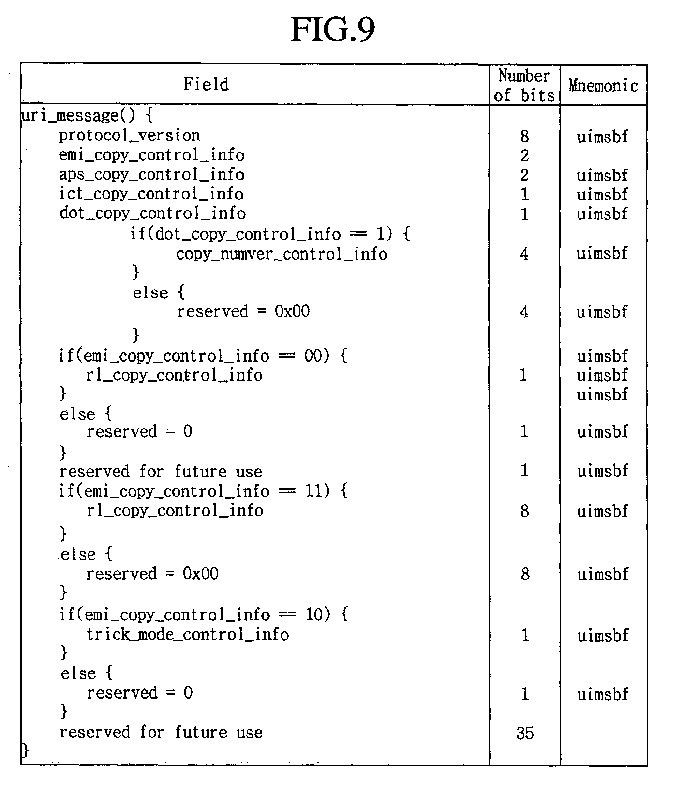

Fig. 9 is a view illustrating a syntax of URI according to another embodiment of the present invention.

The URI may include digital only token information representing whether to prohibit the analog output of content regardless of a value of an encryption mode indicator. Accordingly, the URI may include broadcast content copy number information regardless of a value of an encryption mode indicator. Like the embodiment of Fig. 9, when a value of dot_copy_contro_info is 0x1 regardless of a value of emi_copy_control_info, URI may include copy_number_control_info.

Through this, the broadcast reception device 100 may limit the analog output of broadcast content on the basis of analog digital only token information regardless of whether to limit the copy of content. Additionally, the broadcast reception device 100 may limit the copy of broadcast content on the basis of copy number information of broadcast content when the analog output of broadcast content is limited regardless of whether to limit the copy of content.

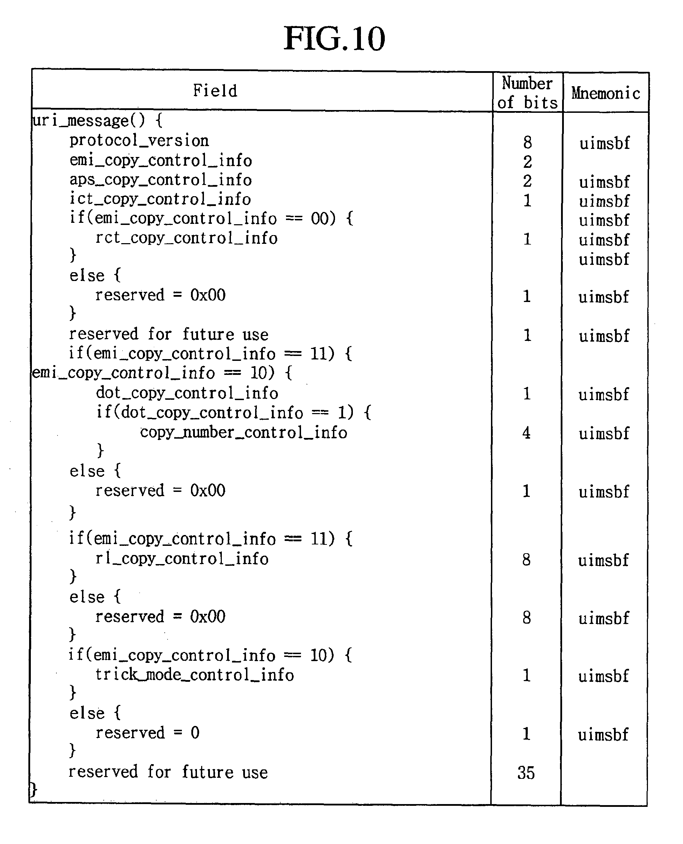

Fig. 10 is a view illustrating a syntax of URI according to another embodiment of the present invention.

When an encryption mode indicator represents at least one of a case that the copy of content is prohibited and a case that the copy of content is allowed only once, the URI may include digital only token information representing whether to prohibit the analog output of content. Accordingly, when an encryption mode indicator represents at least one of a case that the copy of content is prohibited and a case that the copy of content is allowed only once, the URI may include broadcast content copy number information. Like the embodiment of Fig. 10, when a value of emi_copy_control_info corresponds to one of 0x2 and 0x3, it may include dot_copy_contro_info. Additionally, when a value of emi_copy_control_info corresponds to one of 0x2 and 0x3 and a value of dot_copy_contro_info is 0x1, the URI may include copy_number_control_info.

Through this, when the copy of content is allowed only once in addition to a case that the copy of content is prohibited, the broadcast reception device 100 may limit the analog output of broadcast content on the basis of analog digital only token information. Additionally, when the copy of content is allowed only once in addition to a case that the copy of content is prohibited, the broadcast reception device 100 may limit the copy of broadcast content on the basis of broadcast content copy number information if an analog output is limited.

In the above-described embodiment, the digital only token information represents only whether to prohibit the analog output. Since the digital only token information relates to whether to prohibit the analog output and whether to allow the copy, digital only token information representing whether to allow the copy will be described with reference to the following drawings.

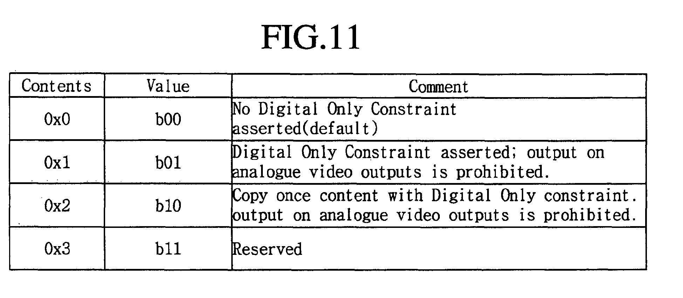

Fig. 11 is a view illustrating a value that digital only token information has according to another embodiment of the present invention.

The digital only token information may represent a case that the analog output of content is not prohibited, a case that the analog output of content is prohibited, and a case that the analog output of content is prohibited and the copy of corresponding content is allowed only once. As described above, the digital only token information may be represented as a dot_copy_control_info field including URI syntax. In a specific embodiment, the dot_copy_control_info field may be a 2-bit field. Additionally, like the embodiment of Fig. 11, in a specific embodiment, a dot_copy_control_info field may represent that the analog output of content is not prohibited. At this point, a value of the dot_copy_control_info field may be 0x0. Additionally, the dot_copy_control_info field may represent that the analog output of content is prohibited. At this point, a value of the dot_copy_control_info field may be 0x1. Additionally, the dot_copy_control_info field may represent that the analog output of content is prohibited and the copy of corresponding content is allowed only once. At this point, a value of the dot_copy_control_info field may be 0x2.

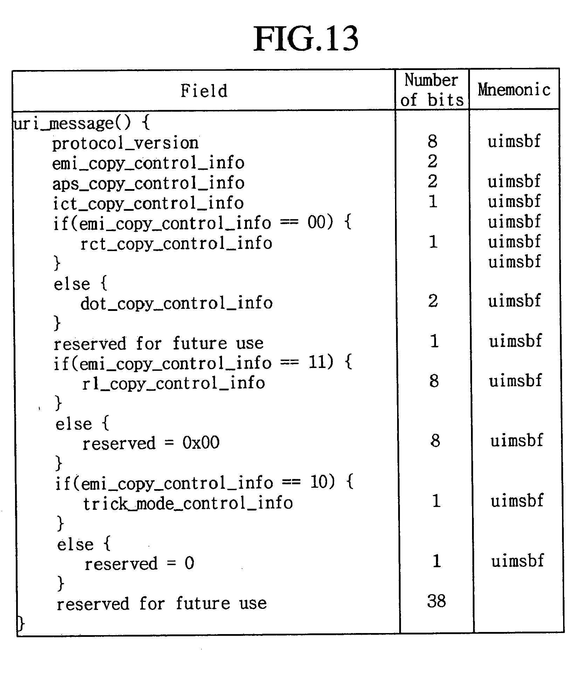

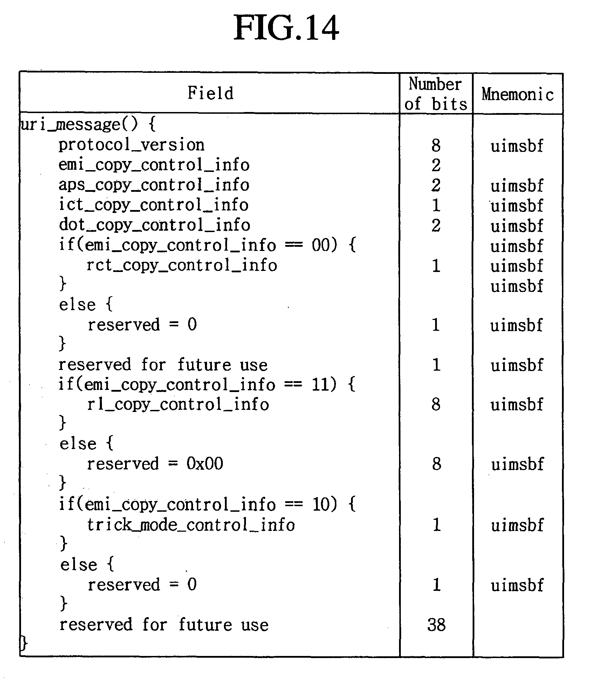

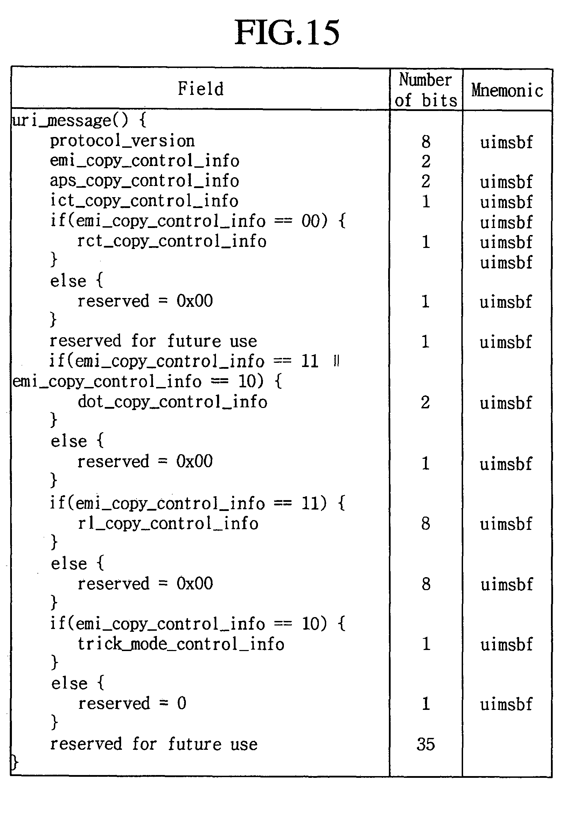

Such digital only token information may be applied to the URI syntax described with reference to Figs. 3 to 10. In more detail, it may be applied like the URI syntax in the embodiments of Figs. 13 to 15. The URI syntax of Figs. 13 to 15 is identical to that of Figs. 3 to 10 except that digital only token information extends and content copy number information is omitted.

The above-described field that represents retention period information representing the maximum retention period of record or time-shift content in the URI syntax is an 8-bit field. In the case of an 8-bit field, the number of days that retention period information represents may be limited. In more detail, in the case of the 8-bit field, according to the above-mentioned embodiment, only the retention of the maximum 252 days may be represented. Since this is a period of less than one year, user's inconvenience may occur. Accordingly, a field representing retention period information that extends the number days in comparison to typical retention period information is required. This will be described with reference to the following drawings.

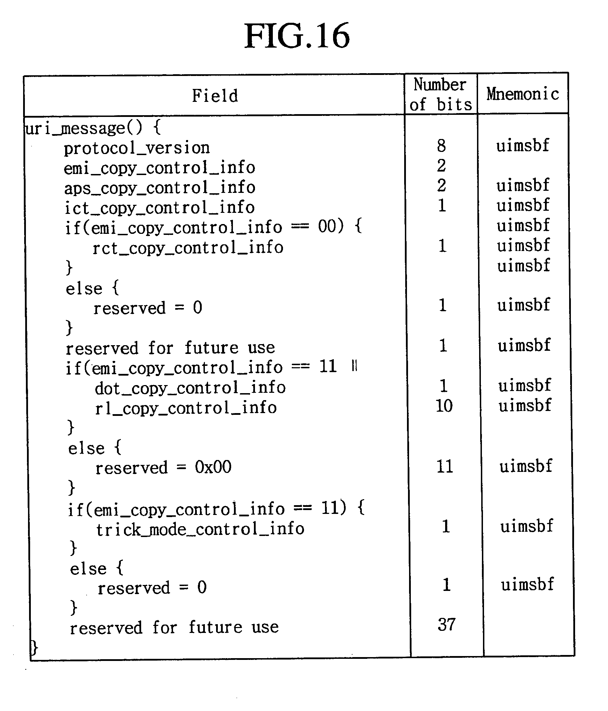

Fig. 16 is a view illustrating a syntax of URI according to another embodiment of the present invention.

The URI may include retention period information representing the maximum retention period of record or time-shift content. In more detail, the retention period information may represent at least one of a case that content is retained for 90 min, a case that content is retained for 6 hr, a case that content is retained for 12 hr, a case that content is retained for one of 1 day to 1020 days, and a case that content is retained without restriction. For this, a filed of retention period information representing the maximum retention period may be a 10-bit field.

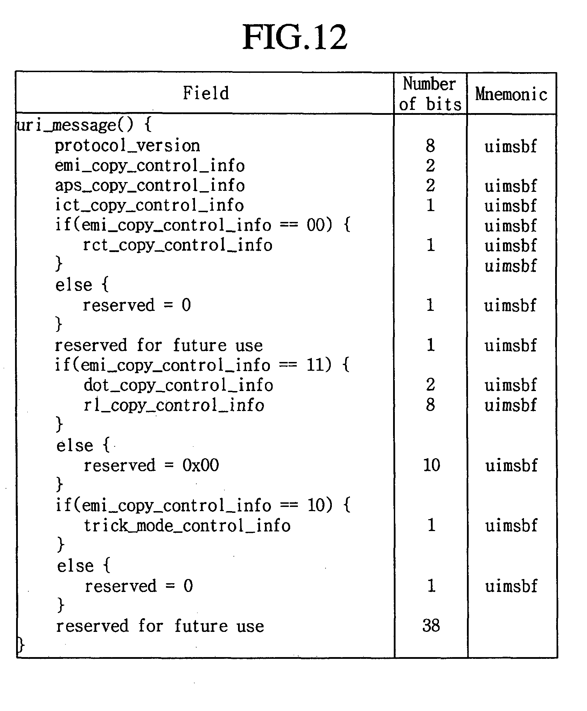

In a specific embodiment, like the embodiment of Fig. 16, rl_copy_control_info representing retention period information may be a 10-bit field. Additionally, a field representing such retention period information may be identically applied to the URI described with reference to Figs. 3 to 15.

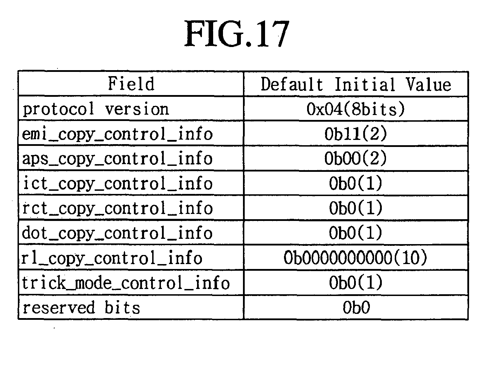

Fig. 17 is a view illustrating a basic value of information that URI includes according to another embodiment of the present invention.

The basic value of retention period information may represent that content is retained for 90 min. At this point, a basic value of rl_copy_control_infomay be 0x0.

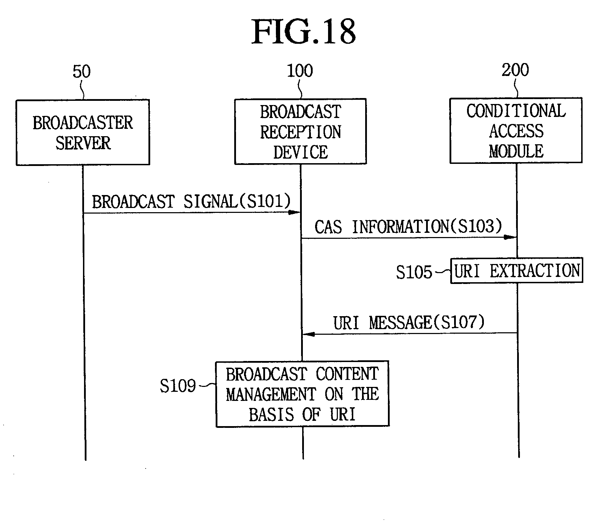

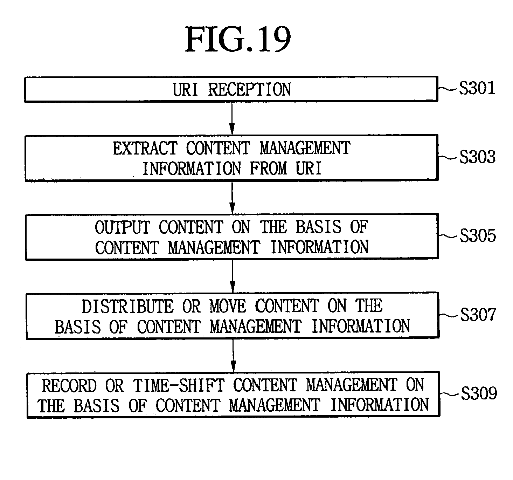

Operations of the broadcast reception device 100 and the CAM 200 will be described in more detail with reference to Figs. 18 and 19.

Fig. 18 is a ladder diagram illustrating an operation that a CAM receives URI and delivers the URI to a broadcast reception device according to an embodiment of the present invention.

The broadcast reception device 100 receives a broadcast signal from a broadcaster server 50 in operation S101. In more detail, the broadcast reception device 100 may receive a broadcast signal from the broadcaster server 50 through the broadcast reception unit 110.

The broadcast reception device 100 transmits CAS information to the CAM 200 in operation S103. In more detail, the broadcast reception device 100 may transmit CAS information to the CAM 200 through the control unit 150. In a specific embodiment , the CAS information may include at least one of ECM and EMM. At this point, the broadcast reception device 100 may transmit at least one of ECM and EMM through a CA descriptor that broadcast stream includes. At this point, the CA descriptor may be included in at least one of a Program Map Table (PMT) and a Conditional Access Table (CAT).

The CAM 200 extracts URI from the CA information in operation S105. In more detail, the CAM 200 may extract URI from CA information through the control unit 210. As described above, the CAM 200 may extract URI from at least one of ECM and EMM. The URI may follow the URI syntax described with reference to Figs. 3 to 17.

The broadcast reception device 100 receives URI from the CAM 200. In a specific embodiment, the broadcast reception device 100 may receive URI in a URI message format from the CAM 200. Additionally, the broadcast reception device 100 receives URI from the CAM 200.

The broadcast reception device 100 manages broadcast content on the basis of URI in operation S109. In more detail, the broadcast reception device 100 may manage broadcast content on the basis of URI. In more detail, as described above, the broadcast reception device 100 may limit the copy of broadcast content on the basis of URI. Additionally, the broadcast reception device 100 may limit the output of broadcast content on the basis of URI. This will be described with reference to Fig. 19.

Fig. 19 is a view illustrating an operation of a broadcast reception device managing broadcast content according to an embodiment of the present invention.

The broadcast reception device 100 receives URI in operation S301. As mentioned above, the broadcast reception device 100 may receive URI from the CAM 200. In more detail, the broadcast reception device 100 may receive URI in a URI message format from the CAM 200.

The broadcast reception device 100 extracts content management information from URI in operation S303. The content management information may include information relating to a control of the analog output of content. In more detail, the content management information may include at least one of analog protection system information representing whether to use analog copy protection applied to the analog output of content, image limited trigger information representing whether to limit the quality of the analog output image of content, and digital only token information representing whether to prohibit the analog output of content. Additionally, the content management information may include information relating to the distribution and movement of content. In more detail, the content management information may include at least one of encryption mode indicator information representing whether to allow the copy of content, redistribution control information representing whether to allow the redistribution of content, and content copy number information representing the number of times that the copy of content is allowed. Additionally, the content management information may include information relating to the record or time-shift content. In more detail, the content management information may include at least one of retention period information representing the maximum retention period of record or time-shift content and trick mode control information representing whether a trick mode for content is limited.

The broadcast reception device 100 manages content on the basis of content management information. In more detail, the broadcast reception device 100 may output content on the basis of content management information in operation S305. In more detail, the broadcast reception device 100 may control an analog output on the basis of information relating to a control of an analog output. In a specific embodiment, the broadcast reception device 100 may apply an analog protection system to an analog output on the basis of analog protection system information representing whether to use analog copy protection applied to the analog output of content. Additionally, in another specific embodiment, the broadcast reception device 100 may limit the quality of an analog output image on the basis of image limited trigger information representing whether to limit the quality of the analog output image of content. For example, the broadcast reception device 100 may not output an image of more than a predetermined quality through an analog output. Additionally, in another specific embodiment, the broadcast reception device 100 may control an analog output on the basis of digital only token information representing whether to prohibit the analog output of content. For example, the broadcast reception device 100 may prohibit an analog output on the basis of the digital only token information. As described above, when encryption mode indicator information represents that the copy is limited, the URI may include digital only token information. In a specific embodiment, when the encryption mode indicator information represents that the copy is limited, the broadcast reception device 100 may prohibit an analog output on the basis of the digital only token information. In more detail, when the encryption mode indicator information represents that the copy is limited, the encryption mode indicator represents that the copy of content is allowed only once. Additionally, when the encryption mode indicator information represents that the copy is limited, the encryption mode indicator represents that the copy of content is not allowed. Additionally, when the encryption mode indicator information represents that the copy is limited, the encryption mode indicator represents that an additional copy of content is not allowed.

The broadcast reception device 100 may distribute or move content on the basis of content management information in operation S307. In more detail, the broadcast reception device 100 may distribute or move content on the basis of information relating to content distribution or movement. In a specific embodiment, the broadcast reception device 100 may limit the copy of broadcast content on the basis of encryption mode indicator information representing whether to allow the copy of content. For example, when the encryption mode indicator information represents that the copy is prohibited, the broadcast reception device 100 may prohibit the copy of content. Additionally, when the encryption mode indicator information represents that the copy of content is allowed once, the broadcast reception device 100 may allow the copy of content once. Additionally, when the encryption mode indicator information represents that an additional copy of content is not allowed, the broadcast reception device 100 may not allow an additional copy of content. In another specific embodiment, the broadcast reception device 100 may control the redistribution of content on the basis of redistribution control information representing whether to allow the redistribution of content. Additionally, when the redistribution control information represents that the redistribution of content is not allowed, the broadcast reception device 100 may not allow the redistribution of content. In another specific embodiment, the broadcast reception device 100 may copy content on the basis of content copy number information representing the number of times that the copy of content is allowed. For example, the broadcast reception device 100 may copy content by the number of times that the content copy number information represents. As described above, when digital only token information represents that the analog output of content is prohibited, the URI may include content copy number information. Accordingly, when the digital only token information represents that an analog output is prohibited, the broadcast reception device 100 may copy content on the basis of content copy number information representing the number of times that the copy of content is allowed.

The broadcast reception device 100 may manage record or time-shift content on the basis of the content management information in operation S309. In more detail, the broadcast reception device 100 may manage record or time-shift content on the basis of information relating to the management of record or time-shift content. In a specific embodiment, the broadcast reception device 100 may have record or time-shift content on the basis of retention period information representing the maximum retention period of record or time-shift content. For example, when it exceeds a retention period that retention period information represents, the broadcast reception device 100 may prohibit a user access for record or time-shift content. Additionally, when it exceeds a retention period that retention period information represents, the broadcast reception device 100 may delete record or time-shift content. In more detail, a retention period that retention period information represents may represent one of 90 min, 6 hr, 12 hr, one of 1 day to 1020 days, and limitless. In another specific embodiment, the broadcast reception device 100 may execute a trick mode for content on the basis of trick mode control information representing whether a trick mode for content is limited. Additionally, the trick mode control information may be applied to Video On Demand (VOD) content instead of record or time-shift content, or content downloaded via an internet protocol (IP) network.

Through the above-described embodiments, broadcast content providers or broadcast content distributors may efficiently manage the usage of broadcast content. Additionally, through the above-described embodiments, broadcast content providers or broadcast content distributors may prevent illegal distribution of broadcast content.

Embodiments of the present invention provide a broadcast reception device managing the copy and output of descrambled broadcast content, a method of operating the broadcast reception device, a CAM, and a method of operating the CAM.

Especially, embodiments of the present invention provide a broadcast reception device managing the number of times that descrambled broadcast content is copied and whether to use an analog output, a method of operating the broadcast reception device, a CAM, and a method of operating the CAM.

The features, structures, and effects described in the above embodiments are included in at least one embodiment of the present invention and are not necessary limited to one embodiment. Furthermore, features, structures, and effects shown in each embodiment may be combined or modified in other embodiments by those skilled in the art. Therefore, it should be interpreted that contents relating to such combination and modification are included in the range of the present invention.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A broadcast reception device connected to a conditional access module descrambling a scrambled broadcast content, the device comprising:
a broadcast reception unit receiving a broadcast signal; and
a control unit receiving usage rule information that defines a usage of the broadcast content relating to the broadcast signal from the conditional access module and managing the broadcast content on the basis of the usage rule information.

2. The device according to claim 1, wherein
the usage rule information comprises digital only token information representing whether to prohibit an analog output of the broadcast content; and
the control unit limits an analog output on the basis of the digital only token information.

3. The device according to claim 1 or 2, wherein
the usage rule information comprises encryption mode indicator information representing whether to allow a copy of the broadcast content; and
when the encryption mode indicator information represents that the copy of the broadcast content is limited, the control unit limits an analog output on the basis of the digital only token information.

4. The device of claim 3, wherein when the encryption mode indicator information represents that the copy of the broadcast content is limited, the encryption mode indicator information represents that the copy of the broadcast content is allowed once.

5. The device according to any one of claims 1 to 4, wherein
the usage rule information comprises retention period information representing a retention period of content obtained by recording or time-shifting the broadcast content; and
the control unit retains the broadcast content on the basis of the retention period information.

6. The device according to claim 5, wherein the retention period information represents one of 90 min, 6hr, 12 hr, one of 1 day to 1020 days, and limitless.

7. The device according to any one of claims 1 to 6, wherein
the usage rule information comprises copy number information representing the number of times that the copy of the broadcast content is allowed; and
the control unit controls the copy of the broadcast content on the basis of the copy number information.

8. The device of claim 7, wherein the copy number information represents one of a case that the copy of the broadcast content is allowed once, a case that the copy of the broadcast content is allowed by one of two times to fourteen times, and a case that the copy of the broadcast content is allowed without limitation.

9. The device according to claim 7 or 8, wherein the copy number information represents a digital copy number only.

10. A method of operating a broadcast reception device connected to a conditional access module descrambling a scrambled broadcast content, the method comprising:
receiving a broadcast signal;
receiving usage rule information that defines a usage of the broadcast content relating to the broadcast signal from the conditional access module; and
managing the broadcast content on the basis of the usage rule information.

11. The method according to claim 10, wherein
the usage rule information comprises digital only token information representing whether to prohibit an analog output of the broadcast content; and
the managing of the broadcast content on the basis of the usage rule information comprises limiting an analog output on the basis of the digital only token information.

12. The method according to claim 10 or 11, wherein
the usage rule information comprises encryption mode indicator information representing whether to allow a copy of the broadcast content; and
the limiting of the analog output on the basis of the digital only token information comprises, when the encryption mode indicator information represents that the copy of the broadcast content is limited, limiting an analog output on the basis of the digital only token information.

13. The method of claim 12, wherein when the encryption mode indicator information represents that the copy of the broadcast content is limited, the encryption mode indicator information represents that the copy of the broadcast content is allowed once.

14. The method according to any one of claims 10 to 13, wherein
the usage rule information comprises retention period information representing a retention period of content obtained by recording or time-shifting the broadcast content; and
when the managing of the broadcast content on the basis of the usage rule information comprises retaining the broadcast content on the basis of the retention period information.

15. A conditional access module connected to a broadcast reception device receiving a broadcast signal, the conditional access module receiving information on a conditional access system from the broadcast signal, extracting usage rule information that defines a usage of the broadcast content relating to the broadcast signal from the information on the conditional access system, and transmitting the usage rule information to the broadcast reception device.
